# EUROPÄISCHE PATENTSCHRIFT

(11) **EP 2 989 422 B1**
(45) Veröffentlichungstag und Bekanntmachung des Hinweises auf die Patenterteilung: **15.07.2020**
(21) Anmeldenummer: 14714189.9
(22) Anmeldetag: 20.03.2014
(51) Int. Cl.: G01C 21/34

(54) **VERFAHREN UND VORRICHTUNG ZUM AUSWÄHLEN EINER ROUTE ZUM BEFAHREN DURCH EIN FAHRZEUG**
METHOD AND DEVICE TO SELECT A ROUTE TO BE TRAVELLED BY A VEHICLE
MÉTHODE ET DISPOSITIF POUR CHOISIR UNE ROUTE À UTILISER PAR UN VÉHICULE

(30) Priorität: 26.04.2013 DE 102013207688
(43) Veröffentlichungstag der Anmeldung: 02.03.2016
(73) Patentinhaber: Robert Bosch GmbH, 70442 Stuttgart (DE)
(72) Erfinder: KNIEP, Stefan Andreas, 31134 Hildesheim (DE); BERSINER, Lutz, 31139 Hildesheim (DE)
(86) Internationale Anmeldenummer: PCT/EP2014/055582
(87) Internationale Veröffentlichungsnummer: WO 2014/173592

(56) Entgegenhaltungen:
- GB-A- 2 448 972
- US-A1- 2007 208 467
- US-A1- 2009 005 974
- US-A1- 2010 262 408

## Beschreibung

### Stand der Technik

Die vorliegende Erfindung bezieht sich auf ein Verfahren zum Auswählen einer Route zum Befahren durch ein Fahrzeug, auf eine Vorrichtung zum Auswählen einer Route zum Befahren durch ein Fahrzeug sowie auf ein entsprechendes Computerprogrammprodukt für einen Einsatz in Fahrzeugen oder in Verbindung mit Fahrzeugen.

Navigationsgeräte für Fahrzeuge ermöglichen mit Hilfe von Positionsbestimmung und gespeicherten Geoinformationen eine Zielführung zu einem gewählten Ort über eine Route unter Beachtung gewünschter Kriterien und Vorgaben. Die JP 2008-233033 A offenbart ein Navigationsgerät, einen Informationsbereitstellungsserver, ein Routensuchverfahren, ein Routensuchprogramm und ein Routensuchsystem, wobei insbesondere eine Neuberechnung der Route ausgelöst werden kann, wenn sich Umstände geändert haben, die für die Route relevant sind.

Die Druckschrift GB 2448972 A offenbart ein System und ein Verfahren zur Steuerung des Betriebs eines Fahrzeugs.

Die Druckschrift US 2007/0208467 A1 offenbart ein Hybridfahrzeug-Antriebssteuersystem und ein entsprechendes Verfahren.

Die Druckschrift US 2009/0005974 A1 offenbart ein Spritkosten-Vorhersagesystem.

### Offenbarung der Erfindung

Vor diesem Hintergrund werden ein Verfahren zum Auswählen einer Route zum Befahren durch ein Fahrzeug, eine Vorrichtung zum Auswählen einer Route zum Befahren durch ein Fahrzeug sowie ein entsprechendes Computerprogrammprodukt gemäß den Ansprüchen 1, 7 und 8 vorgestellt.

Vorteilhafte Ausgestaltungen ergeben sich aus den jeweiligen abhängigen Ansprüchen und der nachfolgenden Beschreibung.

Ein besonders vorteilhaftes Verfahren zum Auswählen einer Route zum Befahren durch ein Fahrzeug weist die in Anspruch 1 aufgeführten Schritte auf.

Bei dem Fahrzeug kann es sich um ein Kraftfahrzeug, insbesondere ein Straßenfahrzeug handeln, wie beispielsweise um einen Personenkraftwagen, ein Motorrad, einen Lastkraftwagen oder ein sonstiges Nutzfahrzeug. Das Verfahren kann in Verbindung mit einem Navigationsgerät und zumindest einem Fahrzeugdatensensor ausgeführt werden. Insbesondere kann es sich bei dem Navigationsgerät um ein fest in ein Fahrzeug eingebautes oder abnehmbar in dem Fahrzeug angeordnetes, mobiles Navigationsgerät handeln, wie beispielsweise ein internetfähiges Mobiltelefon mit Navigationsfunktion, das mittels einer Kommunikationsschnittstelle mit dem zumindest einen Fahrzeugdatensensor verbunden sein kann. Das Navigationsgerät ermöglicht mit Hilfe von Positionsbestimmung und gespeicherten Geoinformationen eine Zielführung zu einem gewählten Ort über eine - benutzerseitig und/oder steuerungsseitig bzw. berechnungsseitig - auswählbare Route bzw. eine von mehreren auswählbaren Routen unter Beachtung gewünschter Kriterien und Vorgaben. Die Geoinformationen können die Streckendaten der Route aufweisen. Die Streckendaten der Route können Streckendaten des zumindest einen Routensegments aufweisen. Die auswählbare Route kann vor oder nach einem Beginn der Zielführung ausgewählt werden. Die auswählbare Route kann das zumindest eine Routensegment aufweisen. Die auswählbare Route kann Teil einer Gruppe von auswählbaren Routen sein. Die auswählbare Route und zumindest eine alternative, auswählbare Route können unterschiedliche Routensegmente oder zumindest ein gemeinsames Routensegment aufweisen.

Der zumindest eine Fahrzeugdatensensor kann ausgebildet sein, um Fahrzeugdaten des Fahrzeugs zu erfassen und dem Navigationsgerät bereitzustellen. Bei den erfassten Fahrzeugdaten handelt es sich um die Ist-Fahrzeugdaten. Anstatt der Erfassung über einen Sensor können die Ist-Fahrzeugdaten auch durch einen geeigneten Algorithmus geschätzt werden. Die Fahrzeugdaten können zumindest einen Wert aufweisen, der sich aufgrund des Befahrens der auswählbaren Route dynamisch ändern kann. Eine dynamische Wertänderung der Fahrzeugdaten ist von den Streckendaten der Route abhängig. Somit ist die dynamische Wertänderung der Fahrzeugdaten auch von einer ausgewählten Route abhängig. Die Prognosefahrzeugdaten können prognostizierte Werte der Fahrzeugdaten für das zumindest eine Routensegment aufweisen. Der Schritt des Prognostizierens kann für das zumindest eine Routensegment der auswählbaren Route ausgeführt werden. Dabei kann der Schritt des Prognostizierens auch für alle Routensegmente der auswählbaren Route ausgeführt werden. Hierbei können auch kumulierte Prognosefahrzeugdaten für die auswählbare Route unter Verwendung von Prognosefahrzeugdaten für eine Mehrzahl von Routensegmenten erzeugt werden. Im Schritt des Bewertens kann das Routenbewertungsergebnis unter Verwendung der Prognosefahrzeugdaten oder kumulierten Prognosefahrzeugdaten erzeugt werden. Das Routenbewertungsergebnis ist ausgebildet, um eine Auswahl einer Route zu bewirken, die eine empfohlene Route für das Fahrzeug darstellt und dazu geeignet ist, das Fahrziel bzw. Routenziel unter Berücksichtigung einer Eignung zumindest eines Routensegments der Route im Hinblick auf die beim Befahren einer auswählbaren Route dynamisch wertveränderlichen Fahrzeugdaten des Fahrzeugs zu erreichen. Das Routenbewertungsergebnis kann auf Prognosefahrzeugdaten für zumindest ein Routensegment basieren. Das Verfahren kann einen Schritt des Auswählens einer auswählbaren Route zum Befahren durch das Fahrzeug aufweisen, wobei im Schritt des Auswählens eine auswählbare Route in Abhängigkeit von dem Routenbewertungsergebnis ausgewählt oder abgelehnt werden kann. Bei dem Schritt des Prognostizierens wird mittels geeigneter Algorithmen bzw. Einrichtungen und gemäß vordefinierten und/oder veränderbaren Regeln von den Streckendaten und den Ist-Fahrzeugdaten auf die Prognosefahrzeugdaten geschlossen. Bei dem Schritt des Bewertens wird mittels geeigneter Algorithmen bzw. Einrichtungen und gemäß vordefinierten und/oder veränderbaren Regeln von den Prognosefahrzeugdaten auf das Routenbewertungsergebnis geschlossen.

Eine besonders vorteilhafte Vorrichtung zum Auswählen einer Route zum Befahren durch ein Fahrzeug weist die Merkmale des Anspruchs 7 auf.

Die Vorrichtung kann ausgebildet sein, um die Schritte einer Variante des vorstehend genannten Verfahrens in entsprechenden Einrichtungen durchzuführen bzw. umzusetzen. Auch durch diese Ausführungsvariante der Erfindung in Form einer Vorrichtung kann die vorstehend genannte Aufgabe vorteilhaft gelöst werden.

Unter einer Vorrichtung kann vorliegend ein elektrisches Gerät verstanden werden, das Streckendaten und erfasste Ist-Fahrzeugdaten verarbeitet und in Abhängigkeit davon Prognosefahrzeugdaten und ein Routenbewertungsergebnis ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung eines im Vorhergehenden erläuterten Verfahrens verwendet wird, wenn das Programm auf einem Computer oder einer Vorrichtung bzw. einer im Vorhergehenden erläuterten Vorrichtung ausgeführt wird.

Gemäß Ausführungsformen der vorliegenden Erfindung kann insbesondere eine Routensuche bzw. eine Routenauswahl unter Berücksichtigung von dynamischen Fahrzeugdaten durchgeführt werden. Hierbei kann beispielsweise mittels einer Prognose über Fahrzeugzustände, z. B. eine Motortemperatur und eines davon abhängigen Energieverbrauchs, eine daraus resultierende, modifizierte Routenberechnung erreicht werden. Es können Prognosen hinsichtlich Änderungen von Fahrzeugdaten, die während eines Befahrens einer Route voraussichtlich auftreten werden, vorgenommen werden und bei der Routenauswahl berücksichtigt werden. Hierbei können zur Prognose die Fahrzeugdaten in Abhängigkeit von Routendaten bzw. Streckendaten angepasst werden. Insbesondere können Prognosefahrzeugdaten für zumindest ein Routensegment als eine Funktion der Streckendaten sowie erfasster Fahrzeugdaten ermittelt werden. Somit können gemäß Ausführungsformen der vorliegenden Erfindung vorhersehbare, während einer Fahrt auftretende Änderungen von Fahrzeugdaten bei der Routensuche bzw. Routenauswahl berücksichtigt werden.

Vorteilhafterweise können gemäß Ausführungsformen der vorliegenden Erfindung Fahrzeugdaten eines Fahrzeugs berücksichtigt und prognostiziert werden, um eine für das Fahrzeug optimale Route zu finden bzw. auszuwählen. Somit kann vorteilhafterweise eine verbrauchsoptimierte Route berechnet bzw. ausgewählt werden, d. h. eine Route mit möglichst geringem Energieverbrauch. Es können zur Berechnung der Route somit nicht nur Nebenbedingungen bezüglich Fahrzeugdaten, beispielsweise bezüglich des Ladezustands, z. B. minimaler Ladezustand bei Ankunft am Ziel, bei der Routensuche berücksichtigt werden, sondern es kann auch insbesondere eine Routenauswahl durch Prognosefahrzeugdaten genauer durchgeführt werden, um verbrauchsgünstigere Routen zu finden. Ändern sich beispielsweise Fahrzeugdaten zwischen zwei Suchläufen, d. h. zwischen einer Auswahl einer ersten Route und einer Auswahl einer zweiten Route, dann kann eine solche Änderung berücksichtigt werden. Zum Beispiel kann sich durch Beladung ein Gesamtgewicht des Fahrzeugs zwischen zwei Suchläufen ändern. Die Änderung kann über eine entsprechende Eingabeschnittstelle oder einen Sensor erfasst werden. Beim zweiten Suchlauf werden die geänderten Fahrzeugdaten beim Schritt des Prognostizierens verwendet. Außerdem bietet die Nutzung von Prognosen beispielsweise gegenüber einem Ansatz, die Route während der Fahrt neu zu berechnen und dabei die geänderten Fahrzeugdaten zu berücksichtigen, einen Vorteil dahin gehend, dass bei der Verwendung von Prognosen eine Route global bezüglich der prognostizierten Fahrzeugdaten optimiert werden kann, anstatt bei einer erforderlichen, möglicherweise wiederholten Neuberechnung mit geänderten Fahrzeugdaten lediglich ein lokales Optimum für die verbleibende Route unter Annahme konstanter, aktualisierter Fahrzeugdaten finden zu können, wobei die Optimierung durch eine aktuelle Position des Fahrzeugs bei der Neuberechnung eingeschränkt ist.

Gemäß einer Ausführungsform des Verfahrens können im Schritt des Prognostizierens ein Ladezustand einer Fahrbatterie, eine Motortemperatur eines Verbrennungsmotors, ein Tankfüllstand und/oder zumindest ein Reifendruck als Fahrzeugdaten unter Verwendung einer Länge, eines Geschwindigkeitsprofils, eines Steigungsprofils, eines Höhenprofils und/oder klimatischer Bedingungen der Route als Streckendaten der Route prognostiziert werden. Beispiele für dynamisch zu berücksichtigende Fahrzeugdaten sind ein Ladezustand einer Batterie bei Elektro- oder Hybridfahrzeugen, eine Motortemperatur, ein Tankfüllstand, eine Fahrzeuginnentemperatur und ein Reifendruck. Ferner können beispielsweise ein Gewicht bzw. eine Masse des Fahrzeugs und/oder geschwindigkeitsabhängige Verbrauchsangaben genutzt werden, um Energieverbräuche auf möglichen Routen möglichst genau zu prognostizieren und somit aus möglichen Routen diejenige auszuwählen, die mit dem gegebenen Fahrzeug den geringsten geschätzten Energieverbrauch aufweist. Eine solche Ausführungsform bietet den Vorteil, dass die Fahrzeugdaten in Verbindung mit den Streckendaten genau prognostiziert werden können, um eine energieverbrauchsminimale Route auszuwählen.

Fahrzeugdaten, die für eine Routensuche bzw. Routenauswahl relevant sind, können sich während der Fahrt ändern. So kann sich zum Beispiel die Motortemperatur während der Fahrt ändern. Dies gilt insbesondere dann, wenn ein Motor zu Beginn einer Fahrt kalt ist. Die Temperatur eines Verbrennungsmotors wirkt sich auf dessen Energieverbrauch aus, da bei kaltem Motor größere Reibungsverluste auftreten als bei warmem Motor. Wenn eine solche Änderung von Fahrzeugdaten bei einer Berechnung einer verbrauchsoptimierten Route durch eine Prognose der Fahrzeugdaten berücksichtigt wird, kann eine Route mit geringerem Energieverbrauch gefunden werden, als wenn die Änderung nicht berücksichtigt würde. Eine solche Route kann beispielsweise auf den ersten Kilometern geringe Geschwindigkeiten aufweisen, weil hohe Geschwindigkeiten die Erwärmung des Motors aufgrund des Fahrtwindes verlangsamen. Ein weiteres Beispiel für Änderungen von relevanten Fahrzeugdaten ist ein Ladezustand (SOC, State of Charge) einer Batterie eines Hybridfahrzeuges. Auf bestimmten Strecken kann eine Nutzung des Elektroantriebs eines solchen Fahrzeugs besonders günstig sein, z. B. innerorts, weil dort viele Beschleunigungsvorgänge erfolgen, während auf anderen Strecken der Verbrennungsmotor zu bevorzugen ist, z. B. auf Autobahnen. In einer Betriebsstrategie eines Hybridfahrzeuges beispielsweise wird entschieden, wann welcher Motor zu welchem Anteil genutzt wird. Dabei ist der Ladezustand eine wesentliche Nebenbedingung, weil der Elektroantrieb nur dann genutzt werden kann, wenn die Batterie über genügend Energie verfügt. Durch Kenntnis der Betriebsstrategie kann eine Prognose über den Ladezustand erstellt werden. Unter Berücksichtigung dieser Prognose kann eine Route berechnet werden, die so geartet ist, dass der Ladezustand zu möglichst jedem Zeitpunkt bzw. in möglichst jedem Routensegment optimal zu den Streckendaten passt. Zum Beispiel kann die Route so geartet sein, dass auf ein langes Gefälle, durch welches die Batterie des Hybridfahrzeuges aufgeladen wird, eine Strecke mit geringer Lastanforderung folgt, auf welcher rein elektrisch gefahren werden kann. Eine aufgrund der gemäß Ausführungsformen der vorliegenden Erfindung ausgewählten Route zeitlich optimierte Nutzung von Verbrennungs- und Elektromotor führt zu einem geringen Gesamtenergieverbrauch auf der Route.

Auch kann im Schritt des Bewertens die Route unter Verwendung eines Eignungsmaßes einer Eignung der Prognosefahrzeugdaten für Streckendaten des zumindest einen Routensegments bewertet werden. Eine solche Ausführungsform bietet den Vorteil, dass eine Route mit einem solchen Routensegment ausgewählt werden kann, das optimal zu bei Erreichen des zumindest einen Routensegments vorliegenden Prognosefahrzeugdaten passt. Somit kann insbesondere eine gegenseitige Anpassung von Prognosefahrzeugdaten und Streckendaten erfolgen, um eine Route mit minimalem Energieverbrauch zu finden.

Gemäß einem nicht beanspruchten Aspekt können im Schritt des Prognostizierens die Fahrzeugdaten unter Verwendung eines statischen Prognosemodells prognostiziert werden. Prognosefahrzeugdaten für Fahrzeugdaten können somit mittels eines statischen Modells berechnet werden. Zum Beispiel kann ein Verlauf einer Motortemperatur, ausgehend von einer aktuellen Motortemperatur bzw. Ist-Motortemperatur und einer Außentemperatur, über Zeit und Strecke für ein gegebenes Fahrzeug vorhergesagt werden. Ebenso kann bei Kenntnis einer Betriebsstrategie ein Verlauf eines Ladezustands einer Batterie eines Elektro- oder Hybridfahrzeuges vorhergesagt werden. Eine solche Ausführungsform bietet den Vorteil, dass Fahrzeugdaten mit geringem Aufwand prognostiziert werden können. Insbesondere können für ein statisches Prognosemodell geeignete Fahrzeugdaten auf diese Weise prognostiziert werden. Somit kann ein möglichst zutreffendes Bewertungsergebnis bei geringem Aufwand erreicht werden.

Ferner können im Schritt des Prognostizierens die Fahrzeugdaten unter Verwendung eines selbstlernenden Prognosemodells prognostiziert werden. Hierbei können zum Anpassen des selbstlernenden Prognosemodells während einer Fahrt des Fahrzeugs erfasste Ist-Fahrzeugdaten mit Prognosefahrzeugdaten verglichen werden. Die Prognosefahrzeugdaten können mittels eines selbstlernenden Modells berechnet werden, bei dem tatsächliche Fahrzeugdaten bzw. Ist-Fahrzeugdaten während einer Fahrt mit den Prognosefahrzeugdaten verglichen werden können, um selbstlernend angepasste Prognosefahrzeugdaten zu erzeugen, und gegebenenfalls zukünftige Prognosen entsprechend angepasst werden können. Eine solche Ausführungsform bietet den Vorteil, dass eine besonders genaue und sich selbst verbessernde Prognose von Fahrzeugdaten ermöglicht wird. Somit kann ein möglichst zutreffendes Bewertungsergebnis basierend auf einer exakten Prognose von Fahrzeugdaten erreicht werden.

Auch können erfindungsgemäß im Schritt des Prognostizierens die Fahrzeugdaten unter Verwendung eines dynamischen Prognosemodells prognostiziert werden. Hierbei können während einer Fahrt des Fahrzeugs erfasste Ist-Fahrzeugdaten ausgewertet werden, um die Prognosefahrzeugdaten anzupassen. Bei dem dynamischen Prognosemodell können während einer Fahrt aktuelle Fahrzeugdaten bzw. Ist-Fahrzeugdaten ausgewertet und auf Basis dieser aktuellen Daten die Prognosefahrzeugdaten angepasst werden. Eine solche Ausführungsform bietet den Vorteil, dass eine weitere Optimierung einer Routenauswahl auch bei bereits gestarteter Zielführung erfolgen kann.

Dabei wird der Schritt des Bewertens der Route unter Verwendung der angepassten Prognosefahrzeugdaten wiederholt, wenn eine Abweichung zwischen den Prognosefahrzeugdaten und den angepassten Prognosefahrzeugdaten einen Schwellenwert überschreitet. Hierbei kann in dem wiederholten Schritt des Bewertens ein angepasstes Bewertungsergebnis erzeugt werden. Ferner kann ansprechend auf den wiederholten Schritt des Bewertens auch ein wiederholter Schritt des Auswählens einer Route unter Verwendung des angepassten Bewertungsergebnisses erfolgen. Wenn eine signifikante Änderung der Prognosedaten auftritt, kann basierend auf den angepassten Prognosefahrzeugdaten eine Route neu ausgewählt oder berechnet werden. Wenn beispielsweise nach 10 Minuten Fahrt die Abweichung der Ist-Motortemperatur von der prognostizierten Motortemperatur mehr als 5 Grad beträgt, dann kann die weitere Prognose angepasst und die Route auf Basis der aktualisierten Prognose neu ausgewählt werden. Eine solche Ausführungsform bietet den Vorteil, dass auf geänderte Fahrzeugdaten sowie Umwelteinflüsse flexibel reagiert werden kann.

Insbesondere kann im Schritt des Bewertens eine Kostenfunktion der Route unter Verwendung der Prognosefahrzeugdaten und der Streckendaten der Route berechnet werden, um das Routenbewertungsergebnis zu erzeugen. Eine Kostenfunktion ist ausgebildet, um einem Routensegment bzw. Straßenstück einen Zahlenwert zuzuordnen, der die Kosten repräsentiert, die beim Befahren des Routensegments entstehen. Die Kosten können eine konkrete Eigenschaft des Routensegments sein, wie beispielsweise dessen Länge oder die Zeit, die zum Befahren des Routensegments benötigt wird. Es kann sich bei den Kosten auch um eine lineare oder logische Kombination von Eigenschaften des Routensegments handeln. Die Eigenschaften des Routensegments können aus Geoinformationen bzw. einer digitalen Karte entnommen werden. Die Kosten einer Route sind die Summe der Kosten der guten Segmente, aus denen die Route zusammengesetzt ist. Eine solche Ausführungsform bietet den Vorteil, dass somit zur Routenauswahl mit der Kostenfunktion ein häufig eingesetztes, zentrales Element von Routensuchalgorithmen genutzt werden kann.

Wenn während einer Routenauswahl bzw. Routensuche zwei mögliche Routen verglichen werden, so kann jeweils diejenige Route bevorzugt werden, deren Kosten gemäß der Kostenfunktion geringer sind. Dies führt dazu, dass als Ergebnis der Routenauswahl eine Route zum Ziel mit minimalen Gesamtkosten ausgegeben wird. Die Kostenfunktion spiegelt also das Optimierungskriterium der Routenauswahl wider. Die Kostenfunktion liefert eine Schätzung von tatsächlichen Kosten, die bei einer Fahrt entlang eines Routensegments entstehen. Durch Verwendung einer Prognose über zukünftige Fahrzeugdaten in der Kostenfunktion kann die Kostenfunktion verbessert werden, d. h., eine Schätzung tatsächlicher Kosten durch die Kostenfunktion wird realitätsnäher, wenn eine zutreffende Prognose in Gestalt der Prognosefahrzeugdaten verwendet wird. Gemäß Ausführungsformen der vorliegenden Erfindung können dynamische Fahrzeugdaten in die Kostenfunktion der Routensuche einbezogen werden. Um die Kosten für ein gegebenes Routensegment zu berechnen, wird eine Prognose über die Fahrzeugdaten, die zum Zeitpunkt des Erreichens des Routensegments durch das Fahrzeug voraussichtlich vorliegen werden, erstellt. Diese Prognose kann unter anderem von Eigenschaften der Strecke bzw. der Route abhängen, die bis zum Erreichen des Routensegments befahren wird.

Zum Beispiel kann eine Kostenfunktion, die einen Energieverbrauch auf einer Route bzw. Stecke angibt, durch eine Prognose einer Motortemperatur verbessert werden, weil der Energieverbrauch wesentlich von der Motortemperatur abhängt. Beispielsweise kann anhand einer Länge, eines Geschwindigkeitsprofils und/oder eines Höhenprofiles der Route eine Prognose über die Motortemperatur zum Zeitpunkt des Erreichens eines Routensegments erstellt werden. Diese Prognose kann verwendet werden, um den voraussichtlichen Energieverbrauch auf dem Routensegment anhand eines motortemperaturabhängigen Verbrauchsmodells zu berechnen. Ein solches Modell kann aus einer Menge von Kurvenpaaren bestehen, die jeweils den Verbrauch für definierte Beschleunigungsvorgänge und für den geschwindigkeitsabhängigen Verbrauch bei Fahrt mit konstanter Geschwindigkeit angeben. Für jede Temperatur kann ein eigenes Kurvenpaar verwendet werden, welches den Verbrauch des Motors angibt. Ebenso kann anhand des Routenverlaufs bzw. Streckenverlaufs ein Ladezustand einer Fahrbatterie eines Hybridfahrzeuges vorausgesagt werden. Die Kostenfunktion kann unter Verwendung der Prognose beispielsweise so gestaltet sein oder werden, dass Bremsvorgänge bei hohem Ladezustand mit höheren Kosten belegt werden als bei niedrigem Ladezustand, weil bei niedrigem Ladezustand mehr Bremsenergie rekuperiert bzw. zurückgewonnen werden kann. Weiterhin könnte ein Gefälle bei niedrigem Ladezustand mit geringeren und gegebenenfalls sogar negativen Kosten belegt werden als bei hohem Ladezustand, weil bei niedrigem Ladezustand mehr Bewegungsenergie rekuperiert bzw. zurückgewonnen werden kann als bei hohem Ladezustand.

Die Erfindung wird nachstehend anhand der beigefügten Zeichnungen beispielhaft näher erläutert. Es zeigen:
- Fig. 1: ein Ablaufdiagramm eines Verfahrens zum Auswählen einer Route zum Befahren durch ein Fahrzeug, gemäß einem Ausführungsbeispiel der vorliegenden Erfindung;
- Fig. 2: eine schematische Darstellung eines Fahrzeugs mit einer Vorrichtung zum Auswählen einer Route zum Befahren durch ein Fahrzeug, gemäß einem Ausführungsbeispiel der vorliegenden Erfindung; und
- Figuren 3 & 4: schematische Darstellungen von auswählbaren Routen zum Befahren durch ein Fahrzeug.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

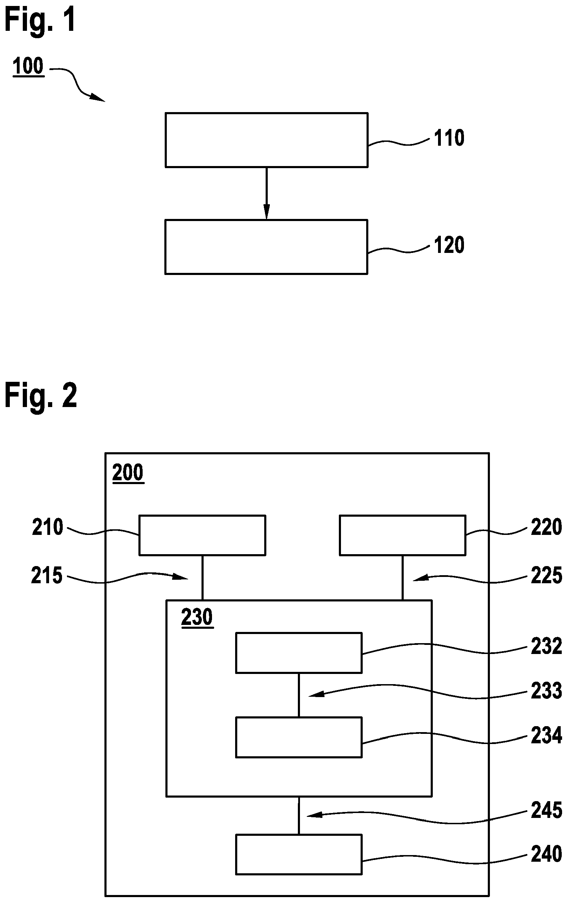

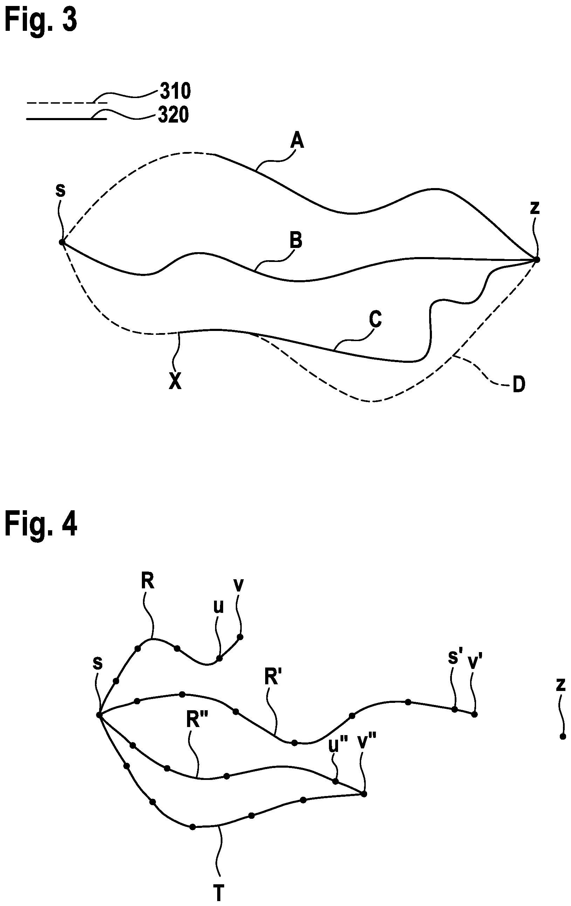

Fig. 1 zeigt ein Ablaufdiagramm eines Verfahrens 100 zum Auswählen einer Route zum Befahren durch ein Fahrzeug, gemäß einem Ausführungsbeispiel der vorliegenden Erfindung. Das Verfahren 100 kann in Verbindung mit einer Vorrichtung bzw. Auswahlvorrichtung gemäß Fig. 2 vorteilhaft ausgeführt werden. Das Verfahren 100 weist einen Schritt 110 des Prognostizierens von beim Befahren einer auswählbaren Route dynamisch wertveränderlichen Fahrzeugdaten des Fahrzeugs für zumindest ein Routensegment der Route unter Verwendung von Streckendaten der Route und erfassten Ist-Fahrzeugdaten des Fahrzeugs auf, um Prognosefahrzeugdaten zu erzeugen. Auch weist das Verfahren 100 einen Schritt 120 des Bewertens der Route unter Verwendung der Prognosefahrzeugdaten auf, um ein Routenbewertungsergebnis zu erzeugen, um die Route unter Einbeziehung des zumindest einen Routensegmentes in Abhängigkeit von dem Routenbewertungsergebnis auszuwählen. Durch eine Ausführung des Verfahrens 100 kann eine Route mit Berücksichtigung von Prognosefahrzeugdaten, wie beispielsweise die in Fig. 3 dargestellte erste Route zur Befahrung durch ein Fahrzeug ausgewählt werden.

Fig. 2 zeigt eine schematische Darstellung eines Fahrzeugs mit einer Vorrichtung zum Auswählen einer Route zum Befahren durch ein Fahrzeug, gemäß einem Ausführungsbeispiel der vorliegenden Erfindung. Gezeigt sind ein Fahrzeug 200, eine Fahrzeugdaten-Bereitstellungsvorrichtung 210, Fahrzeugdaten 215, eine Streckendaten-Bereitstellungsvorrichtung 220, Streckendaten 225, eine Auswahlvorrichtung 230 zum Auswählen einer Route zum Befahren durch das Fahrzeug 200, eine Prognoseeinrichtung 232, Prognosefahrzeugdaten 233, eine Bewertungseinrichtung 234, eine Routenausgabevorrichtung 240 und Routenauswahldaten 245. Das Fahrzeug 200 weist die Fahrzeugdaten-Bereitstellungsvorrichtung 210, die Streckendaten-Bereitstellungsvorrichtung 220 die Auswahlvorrichtung 230 und die Routenausgabevorrichtung 240 auf. Die Auswahlvorrichtung 230 weist die Prognoseeinrichtung 232 und die Bewertungseinrichtung 234 auf. Auch wenn es in Fig. 2 nicht explizit gezeigt ist, sind die Streckendaten-Bereitstellungsvorrichtung 220, die Auswahlvorrichtung 230 und die Routenausgabevorrichtung 240 beispielsweise Teil eines Navigationsgerätes.

Die Fahrzeugdaten-Bereitstellungsvorrichtung 210 weist beispielhaft zumindest einen Fahrzeugdatensensor oder eine Schnittstelle zu zumindest einem Fahrzeugdaten Sensor auf, auch wenn es in Fig. 2 nicht dargestellt ist. Die Fahrzeugdaten-Bereitstellungsvorrichtung 210 ist ausgebildet, um die Fahrzeugdaten 215 weiteren Vorrichtungen bereitzustellen, welche die Fahrzeugdaten 215 verwenden. Bei den Fahrzeugdaten 215 handelt es sich beispielsweise um erfasste Ist-Fahrzeugdaten. Die Fahrzeugdaten 215 umfassen beim Befahren einer auswählbaren Route dynamisch wertveränderliche Fahrzeugdaten des Fahrzeugs 200. Die Fahrzeugdaten-Bereitstellungsvorrichtung 210 ist mittels einer Kommunikationsschnittstelle, beispielsweise einer elektrischen Leitung, einer drahtlosen Verbindung, Funk oder dergleichen, mit der Auswahlvorrichtung 230 verbunden.

Die Streckendaten-Bereitstellungsvorrichtung 220 weist beispielhaft eine Speichereinrichtung für die Streckendaten 225 oder eine Schnittstelle zu einer Speichereinrichtung für die Streckendaten 225 auf, auch wenn es in Fig. 2 nicht dargestellt ist. Bei den Streckendaten 225 handelt es sich beispielsweise um Geodaten einer Navigationsdatenbank oder dergleichen. Die Streckendaten 225 repräsentieren Eigenschaften einer Strecke entlang einer auswählbaren Route. Die Streckendaten-Bereitstellungsvorrichtung 220 ist mittels einer weiteren Kommunikationsschnittstelle, beispielsweise einer elektrischen Leitung, einer drahtlosen Verbindung, Funk oder dergleichen, mit der Auswahlvorrichtung 230 verbunden.

Die Auswahlvorrichtung 230 ist zum Auswählen einer Route zum Befahren durch das Fahrzeug 200 vorgesehen. Die Auswahlvorrichtung 230 ist ausgebildet, um die Fahrzeugdaten 215 von der Fahrzeugdaten-Bereitstellungsvorrichtung 210 und die Streckendaten 225 von der Streckendaten-Bereitstellungsvorrichtung 220 zu empfangen.

Die Prognoseeinrichtung 232 der Auswahlvorrichtung 230 ist ausgebildet, um die Fahrzeugdaten 215 von der Fahrzeugdaten-Bereitstellungsvorrichtung 210 einzulesen. Auch ist die Prognoseeinrichtung 232 ausgebildet, um die Streckendaten 225 von der Streckendaten-Bereitstellungsvorrichtung 220 einzulesen. Die Prognoseeinrichtung 232 ist ferner ausgebildet, um Fahrzeugdaten 215 des Fahrzeugs 200, die beim Befahren einer auswählbaren Route dynamisch wertveränderlich sind, unter Verwendung von Streckendaten 225 der Route und erfassten Ist-Fahrzeugdaten 215 des Fahrzeugs 200 für zumindest ein Routensegment der Route zu prognostizieren, um die Prognosefahrzeugdaten 233 zu erzeugen. Die Prognoseeinrichtung 232 ist beispielhaft ausgebildet, um die Prognosefahrzeugdaten 233 basierend auf einem statischen, dynamischen und/oder selbstlernenden Prognosemodell zu erzeugen.

Die Bewertungseinrichtung 234 der Auswahlvorrichtung 230 ist ausgebildet, um die Prognosefahrzeugdaten 233 von der Prognoseeinrichtung 232 einzulesen. Auch ist die Bewertungseinrichtung 234 ausgebildet, um die Route unter Verwendung der mittels der Prognoseeinrichtung 232 erzeugten Prognosefahrzeugdaten 233 zu bewerten, um ein Routenbewertungsergebnis zu erzeugen, um die Route unter Einbeziehung des zumindest einen Routensegments in Abhängigkeit von dem Routenbewertungsergebnis auszuwählen. Ferner ist die Bewertungseinrichtung 234 optional ausgebildet, um Streckendaten 225 bezüglich des zumindest einen Routensegments einzulesen und die Route unter Verwendung der Prognosefahrzeugdaten 233 und der Streckendaten 225 des zumindest einen Routensegments zu bewerten.

Die Auswahlvorrichtung 230 ist ausgebildet, um in Abhängigkeit von dem Routenbewertungsergebnis der Bewertungseinrichtung 234 die Route auszuwählen oder zu verwerfen. Dabei ist die Auswahlvorrichtung 230 beispielsweise ausgebildet, um die Routenauswahldaten 245 zu generieren, die eine Auswahl der Route zum Befahren durch das Fahrzeug 200 repräsentieren.

Die Routenausgabevorrichtung 240 ist mittels einer weiteren Kommunikationsschnittstelle, beispielsweise einer elektrischen Leitung, einer drahtlosen Verbindung, Funk oder dergleichen, mit der Auswahlvorrichtung 230 verbunden. Die Routenausgabevorrichtung 240 ist ausgebildet, um die Routenauswahldaten 245 von der Auswahlvorrichtung 230 zu empfangen. Auch ist die Routenausgabevorrichtung 240 ausgebildet, um basierend auf den Routenauswahldaten 245 und auf von einem Navigationsgerät empfangenen Routendaten bzw. Zielführungsdaten zumindest einer auswählbaren Route einem Fahrer des Fahrzeugs 200 die Route zum Befahren durch das Fahrzeug 200 auszugeben.

Fig. 3 zeigt eine schematische Darstellung von auswählbaren Routen zum Befahren durch ein Fahrzeug. Gezeigt sind eine erste Route A, eine zweite Route B, eine dritte Route C sowie eine vierte Route D, ein Startknoten bzw. Start s der Routen, ein Ort X einer Neuberechnung, ein Zielknoten bzw. Ziel z der Routen, erste Streckeneigenschaften 310, die beispielhaft für einen kalten Motor eines Fahrzeugs günstig sind, und zweite Streckeneigenschaften 320, die beispielhaft für einen warmen Motor eines Fahrzeugs günstig sind. Die Routen A, B, C und D verlaufen zwischen dem Start s und dem Ziel z. Der Ort X der Neuberechnung ist zwischen dem Start s und dem Ziel z angeordnet.

Die erste Route A ist eine Route mit Berücksichtigung von Prognosefahrzeugdaten. Die erste Route A ist beispielsweise mittels des Verfahrens aus Fig. 1 und/oder mittels der Vorrichtung bzw. Auswahlvorrichtung aus Fig. 2 ausgewählt. Die erste Route A erstreckt sich von dem Start s bis zu dem Ziel z. In einem ersten Teilabschnitt der Route, beginnend an dem Start s weist die Route die ersten Streckeneigenschaften 310 auf, die günstig für einen kalten Motor sind. In einem zweiten Teilabschnitt der Route, der sich zwischen dem ersten Teilabschnitt und dem Ziel z erstreckt, weist die Route die zweiten Streckeneigenschaften 320 auf, die günstig für einen warmen Motor sind.

Die zweite Route B ist eine Route ohne Berücksichtigung von Prognosefahrzeugdaten. Die zweite Route B ist basierend auf einem Motormodell "Warm" bzw. einem Verbrauchsmodell für einen warmen Motor ausgewählt. Die zweite Route B erstreckt sich von dem Start s bis zu dem Ziel z. Somit weist die zweite Route B entlang ihrer Gesamterstreckung zwischen dem Start s und dem Ziel z die zweiten Streckeneigenschaften 320 auf, die günstig für einen warmen Motor sind.

Die vierte Route D ist eine Route ohne Berücksichtigung von Prognosefahrzeugdaten. Die vierte Route D ist basierend auf einem Motormodell "Kalt" bzw. einem Verbrauchsmodell für einen kalten Motor ausgewählt. Die vierte Route D erstreckt sich von dem Start s bis zu dem Ziel z. Somit weist die vierte Route D entlang ihrer Gesamterstreckung zwischen dem Start s und dem Ziel z die ersten Streckeneigenschaften 310 auf, die günstig für einen kalten Motor sind.

Die dritte Route C ist eine Route, die an dem Ort X der Neuberechnung ohne Berücksichtigung von Prognosefahrzeugdaten sowie basierend auf einem Motormodell "Warm" bzw. einem Verbrauchsmodell für einen warmen Motor neu berechnet ist. Der Ort X der Neuberechnung ist entlang der vierten Route D angeordnet. Die dritte Route C erstreckt sich von dem Ort X der Neuberechnung bis zu dem Ziel z. Die dritte Route C weist entlang ihrer Gesamterstreckung zwischen dem Ort X der Neuberechnung und dem Ziel z die zweiten Streckeneigenschaften 320 auf, die günstig für einen warmen Motor sind.

Es sind anders ausgedrückt in Fig. 3 somit vier verschiedene Routen A, B, C und D vom Start s zum Ziel z gezeigt. Die erste Route A ist unter Verwendung von Prognosefahrzeugdaten ausgewählt bzw. berechnet und setzt sich aus einer kürzeren Strecke in Gestalt des ersten Teilabschnitts, der bei kaltem Motor günstig ist, und einer längeren Strecke in Gestalt des zweiten Teilabschnitts zusammen, der bei warmem Motor günstig ist. Die erste Route A ist so berechnet, dass der Motor ungefähr bei einem Übergang zwischen dem ersten Teilabschnitt und dem zweiten Teilabschnitt seine Betriebstemperatur erreicht hat.

Die zweite Route B ist ohne Berücksichtigung von Prognosefahrzeugdaten mit einem Verbrauchsmodell für einen warmen Motor berechnet. Es ist anzunehmen, dass ein tatsächlicher Kraftstoffverbrauch auf der zweiten Route B größer ist als berechnet, weil ein bei kaltem Motor erhöhter Kraftstoffverbrauch am Anfang der zweiten Route B nicht berücksichtigt ist. Aufgrund der nicht erfolgten Berücksichtigung ist anzunehmen, dass der Verbrauch größer ist als auf der ersten Route A.

Die vierte Route D ist ohne Berücksichtigung von Prognosefahrzeugdaten mit einem Verbrauchsmodell für einen kalten Motor berechnet. Es ist anzunehmen, dass ein tatsächlicher Kraftstoffverbrauch auf der vierten Route D zwar kleiner als berechnet, aber größer als auf der ersten Route A ist, weil die vierte Route D für einen kalten Motor optimiert ist, wobei der Motor während eines Hauptanteils der vierten Route D jedoch warm ist.

Die dritte Route C ist während einer Fahrt entlang der vierten Route D berechnet, wenn der Motor seine Betriebstemperatur erreicht. Von der Position X aus ist die dritte Route C bei warmem Motor optimal. Es ist anzunehmen, dass die Kombination der vierten Route D und der dritten Route C einen höheren Kraftstoffverbrauch aufweist als die erste Route A, weil die dritte Route C mangels Alternativen im Straßennetz an dem vorgeschobenen Ort X beispielhaft eine starke Kurvigkeit aufweist, die sich negativ auf den Kraftstoffverbrauch auswirkt. Dieser Umstand kann ohne Verwendung von Prognosefahrzeugdaten bei der Routenauswahl nicht berücksichtigt werden, weil zum Zeitpunkt der Berechnung der vierten Route D noch nicht bekannt war, dass später eine Neuberechnung mit anderen Parametern, der veränderten Motortemperatur, erfolgt.

Viele Algorithmen zur Routensuche basieren beispielsweise auf einer iterativen Erweiterung von Routen um weitere Routensegmente bzw. Straßenstücke. Hierbei beginnen Routen beispielsweise in einer Startposition der Routensuche, führen in den meisten Fällen aber noch nicht bis zum Ziel. Um zu entscheiden, ob eine Route um ein Routensegment bzw. Straßenstück erweitert werden soll, wird das Routensegment bewertet. Anhand der Eigenschaften einer Route, wie beispielsweise deren Länge, Geschwindigkeitsprofil oder Steigungsprofil, wird gemäß Ausführungsbeispielen der vorliegenden Erfindung eine Prognose über die Fahrzeugdaten erstellt, die zum Zeitpunkt des Erreichens des Routensegmentes durch das Fahrzeug voraussichtlich vorliegen werden. Mit dieser Prognose kann die Eignung des Routensegments für die Route genauer eingeschätzt werden als ohne die Prognose. Die genauere Bewertung der einzelnen Routensegmente führt dazu, dass eine bessere Route gefunden wird als ohne die Prognosen über die Fahrzeugdaten. Außerdem bietet die Nutzung von Prognosen einen Vorteil gegenüber einem Ansatz, eine Route während einer Fahrt neu zu berechnen und erst dabei die geänderten Fahrzeugdaten zu berücksichtigen. Bei der Verwendung von Prognosen wird die Route insbesondere von vornherein möglichst in ihrer Gesamtheit bezüglich der prognostizierten Fahrzeugdaten optimiert, während bei einer Neuberechnung nur ein lokales Optimum unter Annahme konstanter, aktualisierter Fahrzeugdaten gefunden werden kann und die Optimierung durch eine aktuelle Position des Fahrzeugs eingeschränkt ist. Dieser Sachverhalt ist in Fig. 3 dargestellt.

Fig. 4 zeigt eine schematische Darstellung von auswählbaren Routen zum Befahren durch ein Fahrzeug. Anders ausgedrückt zeigt Fig. 4 auswählbare Routen zum Befahren durch ein Fahrzeug im Zusammenhang mit einer Kostenfunktion bei einer Routenauswahl bzw. Routensuche. Gezeigt sind ein Startknoten s, eine erste Route R von dem Startknoten s bis zu einem mittleren Knoten u und weiter bis zu einem Erweiterungsknoten v, eine zweite Route R' von dem Startknoten s bis zu einem mittleren Knoten u' und weiter bis zu einem Erweiterungsknoten v', eine dritte Route R" von dem Startknoten s bis zu einem mittleren Knoten u" und weiter bis zu einem Erweiterungsknoten v", eine vierte Route T von dem Startknoten s bis zu dem Erweiterungsknoten v" und ein Zielknoten z.

Fig. 4 zeigt anders ausgedrückt Beispiele für Situationen, in denen eine Prozedur "Erweitere und bewerte Route" durchgeführt wird. Es sind in Fig. 4 beispielhaft lediglich der Startknoten s, der Zielknoten z und weitere Knoten u, v, u', v', u" sowie v" und Kanten dargestellt, die zu einer der Beispielrouten gehören. Die Prozedur wird für die erste Route R, die zweite Route R' und die dritte Route R" im Verlauf einer Routensuche zu verschiedenen Zeitpunkten ausgeführt. Im Fall der ersten Route R und der zweiten Route R' ist zum Zeitpunkt der Ausführung der Prozedur eine Route bis zu dem jeweiligen Erweiterungsknoten v bzw. v' unbekannt. Im Fall der dritten Route R" ist zum Zeitpunkt der Ausführung der Prozedur bereits die vierte Route T bekannt, die zu dem Erweiterungsknoten v" führt. Nur wenn eine Summe von Kosten der dritten Route R" bis zu dem mittleren Knoten u" und von Kosten eines Routensegments von dem mittleren Knoten u" bis zu dem Erweiterungsknoten v" geringer ist als Kosten der vierten Route T, wird die dritte Route R" als neue beste Route zu dem Erweiterungsknoten v" ausgewählt bzw. abgespeichert.

Im Folgenden wird unter Bezugnahme auf die Figuren 1 bis 4 beispielhaft beschrieben, wie streckenabhängige bzw. streckendatenabhängige Prognosen von Fahrzeugdaten in vielen Algorithmen zur Routensuche berücksichtigt werden können. Dabei ist das Straßennetz durch einen mathematischen Graphen mit Knoten und Kanten repräsentiert, wobei ein Knoten eine Kreuzung und eine Kante eine Straße bzw. ein Routensegment oder einen Straßenabschnitt repräsentiert. Beispielsweise verbindet eine Kante u,v hierbei die Knoten u und v.

Zunächst wird die grundlegende Prozedur "Erweitere und bewerte Route" beschrieben, die in vielen Algorithmen zur Routensuche verwendet wird. In der Prozedur wird eine Route R, die vom Startknoten der Routensuche s zu einem Knoten u führt, um eine Kante u,v erweitert. Diese erweiterte Route sei R+. Es soll entschieden werden, ob die Kosten von R+ geringer sind als Kosten einer bisher besten Route von s zu v, sofern schon eine solche Route bekannt ist. Die Kosten von R sind beispielsweise aus früheren Iterationen des Algorithmus bekannt. Die Prozedur besteht aus den folgenden Schritten: 1. Um die Kosten von R+ zu berechnen, werden die Kosten von u,v auf die Kosten von R addiert. 2. Wenn die Kosten von R+ geringer sind als die Kosten der bisher besten Route zu v, sofern schon eine solche Route bekannt ist, dann wird R+ als neue beste Route zu v abgespeichert. Wenn noch keine solche Route bekannt ist, wird R+ ebenfalls als neue beste Route zu v abgespeichert. Weiterhin werden die Kosten von R+ abgespeichert. Eine solche oder ähnliche grundlegende Prozedur wird zum Beispiel in bekannten Routensuchalgorithmen durchgeführt, wie beispielsweise A*, Dijkstra und Bellmann-Ford.

Gemäß Ausführungsbeispielen der vorliegenden Erfindung ist die obige Prozedur modifiziert. Die Modifikation besteht darin, die Kosten von u,v in Schritt 1 in Abhängigkeit von Eigenschaften der Route R zu berechnen und dann auf die Kosten von R zu addieren. Die benötigten Eigenschaften von R werden ebenso wie die Kosten von R iterativ oder nicht-iterativ anhand von Daten aus einer digitalen Karte berechnet. Diese können in derselben Datenstruktur abgespeichert werden, in der auch die bisher geringsten Kosten zu jedem Knoten abgespeichert werden. Insbesondere kann das Verfahren aus Fig. 1 in Verbindung mit einem Algorithmus, der die oben angegebene grundlegende Prozedur nutzt, angewendet werden. Beispiele für Streckendaten bzw. Eigenschaften der Route, auf deren Basis die Prognose der Fahrzeugdaten berechnet wird, sind Länge, Geschwindigkeitsprofil, Steigungs- und Höhenprofil und klimatische Bedingungen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (100) zum Auswählen einer Route zum Befahren durch ein Fahrzeug (200), wobei das Verfahren (100) folgende Schritte aufweist:
Prognostizieren (110) von beim Befahren einer auswählbaren Route dynamisch wertveränderlichen Fahrzeugdaten (215) des Fahrzeugs (200) für zumindest ein Routensegment der Route unter Verwendung von Streckendaten (225) der Route und erfassten oder geschätzten Ist-Fahrzeugdaten (215) des Fahrzeugs (200), um Prognosefahrzeugdaten (233) zu erzeugen, wobei die Prognosefahrzeugdaten prognostizierte Werte der Fahrzeugdaten für das zumindest eine Routensegment der auswählbaren Route aufweisen; und
Bewerten (120) der Route unter Verwendung der Prognosefahrzeugdaten (233), um ein Routenbewertungsergebnis (245) zu erzeugen, um die Route unter Einbeziehung des zumindest einen Routensegmentes in Abhängigkeit von dem Routenbewertungsergebnis (245) auszuwählen,
**dadurch gekennzeichnet, dass**
im Schritt des Prognostizierens (110) die Fahrzeugdaten (215) unter Verwendung eines dynamischen Prognosemodells prognostiziert werden, wobei während einer Fahrt des Fahrzeugs (200) erfasste Ist-Fahrzeugdaten (215) ausgewertet werden, um die Prognosefahrzeugdaten (233) anzupassen und wobei der Schritt des Bewertens (120) der Route unter Verwendung der angepassten Prognosefahrzeugdaten wiederholt wird, wenn eine Abweichung zwischen den Prognosefahrzeugdaten (233) und den angepassten Prognosefahrzeugdaten einen Schwellenwert überschreitet.

2. Verfahren (100) gemäß Anspruch 1, **dadurch gekennzeichnet, dass** im Schritt des Prognostizierens (110) ein Ladezustand einer Fahrbatterie, eine Motortemperatur eines Verbrennungsmotors, ein Tankfüllstand und/oder zumindest ein Reifendruck als Fahrzeugdaten (215) unter Verwendung einer Länge, eines Geschwindigkeitsprofils, eines Steigungsprofils, eines Höhenprofils und/oder klimatischer Bedingungen der Route als Streckendaten (225) der Route prognostiziert wird.

3. Verfahren (100) gemäß einem der vorangegangenen Ansprüche, **dadurch gekennzeichnet, dass** im Schritt des Bewertens (120) die Route unter Verwendung eines Eignungsmaßes einer Eignung der Prognosefahrzeugdaten (233) für Streckendaten (225) des zumindest einen Routensegments bewertet wird.

4. Verfahren (100) gemäß einem der vorangegangenen Ansprüche, **dadurch gekennzeichnet, dass** im Schritt des Prognostizierens (110) die Fahrzeugdaten (215) unter Verwendung eines statischen Prognosemodells prognostiziert werden.

5. Verfahren (100) gemäß einem der vorangegangenen Ansprüche, **dadurch gekennzeichnet, dass** im Schritt des Prognostizierens (110) die Fahrzeugdaten (215) unter Verwendung eines selbstlernenden Prognosemodells prognostiziert werden, wobei zum Anpassen des selbstlernenden Prognosemodells während einer Fahrt des Fahrzeugs (200) erfasste Ist-Fahrzeugdaten (215) mit Prognosefahrzeugdaten (233) verglichen werden.

6. Verfahren (100) gemäß einem der vorangegangenen Ansprüche, **dadurch gekennzeichnet, dass** im Schritt des Bewertens (120) eine Kostenfunktion der Route unter Verwendung der Prognosefahrzeugdaten (233) und der Streckendaten (225) der Route berechnet wird, um das Routenbewertungsergebnis (245) zu erzeugen.

7. Vorrichtung (230) zum Auswählen einer Route zum Befahren durch ein Fahrzeug (200), wobei die Vorrichtung (230) folgende Merkmale aufweist:
eine Einrichtung (232) zum Prognostizieren von beim Befahren einer auswählbaren Route dynamisch wertveränderlichen Fahrzeugdaten (215) des Fahrzeugs (200) für zumindest ein Routensegment der Route unter Verwendung von Streckendaten der Route und erfassten oder geschätzten Ist-Fahrzeugdaten (215) des Fahrzeugs (200), um Prognosefahrzeugdaten (233) zu erzeugen, wobei die Prognosefahrzeugdaten prognostizierte Werte der Fahrzeugdaten für das zumindest eine Routensegment der auswählbaren Route aufweisen; und
eine Einrichtung (234) zum Bewerten der Route unter Verwendung der Prognosefahrzeugdaten (233), um ein Routenbewertungsergebnis (245) zu erzeugen, um die Route unter Einbeziehung des zumindest einen Routensegmentes in Abhängigkeit von dem Routenbewertungsergebnis (245) auszuwählen
**dadurch gekennzeichnet, dass**
die Einrichtung (232) zum Prognostizieren ausgebildet ist, um die Fahrzeugdaten (215) unter Verwendung eines dynamischen Prognosemodells zu prognostizieren, wobei während einer Fahrt des Fahrzeugs (200) erfasste Ist-Fahrzeugdaten (215) ausgewertet werden, um die Prognosefahrzeugdaten (233) anzupassen und wobei die Einrichtung (234) zum Bewerten ausgebildet ist, um das Bewerten (120) der Route unter Verwendung der angepassten Prognosefahrzeugdaten zu wiederholen, wenn eine Abweichung zwischen den Prognosefahrzeugdaten (233) und den angepassten Prognosefahrzeugdaten einen Schwellenwert überschreitet.

8. Computer-Programmprodukt mit Programmcode zur Durchführung des Verfahrens (100) nach einem der Ansprüche 1 bis 6, wenn das Programm auf einer Vorrichtung (230) nach Anspruch 7 ausgeführt wird.

## Claims

1. Method (100) for selecting a route to be travelled along by a vehicle (200), wherein the method (100) comprises the following steps:
predicting (110) vehicle data (215), with dynamically variable values when a selectable route is travelled along, of the vehicle (200) for at least one route segment of the route using route data (225) of the route and acquired or estimated actual vehicle data (215) of the vehicle (200), in order to generate prediction vehicle data (233), wherein the prediction vehicle data comprise predicted values of the vehicle data for the at least one route segment of the selectable route; and
evaluating (120) the route using the prediction vehicle data (233) in order to generate a route evaluation result (245), in order to select the route using the at least one route segment in accordance with the route evaluation result (245),
**characterized in that**
in the prediction step (110), the vehicle data (215) is predicted using a dynamic prediction model, wherein actual vehicle data (215) which is acquired while the vehicle (200) is travelling is assessed in order to adapt the prediction vehicle data (233), and wherein the evaluation step (120) of the route is repeated using the adapted prediction vehicle data if a difference between the prediction vehicle data (233) and the adapted prediction vehicle data exceeds a threshold value.

2. Method (100) according to Claim 1, **characterized in that,** in the prediction step (110), a state of charge of a vehicle battery, an engine temperature of an internal combustion engine, a tank filling level and/or at least one tyre pressure are/is predicted as vehicle data (215) using a length, a speed profile, a gradient profile, an altitude profile and/or climatic conditions of the route as route data (225) of the route.

3. Method (100) according to one of the preceding claims, **characterized in that,** in the evaluation step (120), the route is evaluated using a suitability measure of suitability of the prediction vehicle data (233) for route data (225) of the at least one route segment.

4. Method (100) according to one of the preceding claims, **characterized in that,** in the prediction step (110), the vehicle data (215) are predicted using a static prediction model.

5. Method (100) according to one of the preceding claims, **characterized in that,** in the prediction step (110), the vehicle data (215) is predicted using a self-learning prediction model, wherein, in order to adapt the self-learning prediction model, actual vehicle data (215) which is acquired while the vehicle (200) is travelling is compared with prediction vehicle data (233).

6. Method (100) according to one of the preceding claims, **characterized in that,** in the evaluation step (120), a cost function of the route is calculated using the prediction vehicle data (233) and the route data (225) of the route, in order to generate the route evaluation result (245).

7. Device (230) for selecting a route to be travelled along by a vehicle (200), wherein the device (230) comprises the following features:
an apparatus (232) for predicting vehicle data (215), with dynamically variable values when a selectable route is travelled along, of the vehicle (200) for at least one route segment of the route using the route data of the route and acquired or estimated actual vehicle data (215) of the vehicle (200) in order to generate prediction vehicle data (233), wherein the prediction vehicle data comprise predicted values of the vehicle data for the at least one route segment of the selectable route; and
an apparatus (234) for evaluating the route using the prediction vehicle data (233) in order to generate a route evaluation result (245), in order to select the route using the at least one route segment in accordance with the route evaluation result (245),
**characterized in that**
the apparatus (232) is designed to make predictions, in order to predict the vehicle data (215) using a dynamic prediction model, wherein actual vehicle data (215) which is acquired while the vehicle (200) is travelling is assessed in order to adapt the prediction vehicle data (233), and wherein the apparatus (234) is designed to make evaluations, in order to repeat the evaluation (120) of the route using the adapted prediction vehicle data if a difference between the prediction vehicle data (233) and the adapted prediction vehicle data exceeds a threshold value.

8. Computer program product with program code for carrying out the method (100) according to one of Claims 1 to 6 if the program is run on a device (230) according to Claim 7.

## Revendications

1. Procédé (100) de sélection d'un itinéraire devant être emprunté par un véhicule (200), le procédé (100) comprenant les étapes suivantes :
le pronostic (110) de données de véhicule (215) relatives au véhicule (200) et pouvant changer dynamiquement de valeur lorsqu'un itinéraire pouvant être sélectionné est emprunté, pour au moins un tronçon de l'itinéraire, en utilisant des données de trajet (225) relatives à l'itinéraire et des données de véhicule (215) effectives acquises ou estimées relatives au véhicule (200) pour générer des données de véhicule de pronostic (233), dans lequel les données de véhicule de pronostic comprennent des valeurs pronostiquées des données de véhicule pour ledit au moins un tronçon d'itinéraire relatif à l'itinéraire pouvant être sélectionné ; et
l'évaluation (120) de l'itinéraire au moyen des données de véhicule de pronostic (233), pour générer un résultat d'évaluation d'itinéraire (245), afin de sélectionner l'itinéraire en prenant en compte ledit au moins un tronçon d'itinéraire en fonction du résultat d'évaluation d'itinéraire (245),
**caractérisé en ce qu'**à l'étape de pronostic (110), les données de véhicule (215) sont pronostiquées à l'aide d'un modèle de pronostic dynamique, dans lequel les données de véhicule (215) effectives acquises pendant un déplacement du véhicule (200) sont évaluées afin d'ajuster les données de véhicule de pronostic (233) et dans lequel l'étape d'évaluation (120) de l'itinéraire au moyen des données de véhicule de pronostic ajustées est répétée lorsqu'un écart entre les données de véhicule de pronostic (233) et les données de véhicule de pronostic ajustées dépasse une valeur de seuil.

2. Procédé (100) selon la revendication 1, **caractérisé en ce qu'**à l'étape de pronostic (110), un état de charge d'une batterie de traction, une température de moteur d'un moteur à combustion interne, un niveau de carburant et/ou au moins une pression de pneu sont pronostiqués en tant que données de véhicule (215) en utilisant une longueur, un profil de vitesse, un profil de pente, un profil d'altitude et/ou des conditions climatiques de l'itinéraire en tant que données de trajet (225) relatives à l'itinéraire.

3. Procédé (100) selon l'une des revendications précédentes, **caractérisé en ce qu'**à l'étape d'évaluation (120), l'itinéraire est évalué au moyen d'une mesure d'adéquation relative à une adéquation des données de véhicule de pronostic (233) à des données de trajet (225) relatives audit au moins un tronçon d'itinéraire.

4. Procédé (100) selon l'une des revendications précédentes, **caractérisé en ce qu'**à l'étape de pronostic (110), les données de véhicule (215) sont pronostiquées à l'aide d'un modèle de pronostic statique.

5. Procédé (100) selon l'une des revendications précédentes, **caractérisé en ce qu'**à l'étape de pronostic (110), les données de véhicule (215) sont pronostiquées à l'aide d'un modèle de pronostic à auto-apprentissage, dans lequel des données de véhicule (215) effectives acquises pendant un déplacement du véhicule (200) sont comparées à des données de véhicule de pronostic (233) afin d'ajuster le modèle de pronostic à auto-apprentissage.

6. Procédé (100) selon l'une des revendications précédentes, **caractérisé en ce qu'**à l'étape d'évaluation (120), une fonction de coût de l'itinéraire est calculée en utilisant les données de véhicule de pronostic (233) et les données de trajet (225) relatives à l'itinéraire afin de générer le résultat d'évaluation d'itinéraire (245) .

7. Dispositif (230) de sélection d'un itinéraire devant être emprunté par un véhicule (200), dans lequel le dispositif (230) présente les caractéristiques suivantes :
un moyen (232) de pronostic de données de véhicule (215) relatives au véhicule (200) et pouvant changer dynamiquement de valeur lorsqu'un itinéraire pouvant être sélectionné est emprunté, pour au moins un tronçon de l'itinéraire, en utilisant des données de trajet relatives à l'itinéraire et des données de véhicule (215) effectives acquises ou estimées relatives au véhicule (200) pour générer des données de véhicule de pronostic (233), dans lequel les données de véhicule de pronostic comprennent des valeurs pronostiquées des données de véhicule pour ledit au moins un tronçon d'itinéraire relatif à l'itinéraire pouvant être sélectionné ; et
un moyen (234) d'évaluation de l'itinéraire au moyen des données de véhicule de pronostic (233), pour générer un résultat d'évaluation d'itinéraire (245), afin de sélectionner l'itinéraire en prenant en compte ledit au moins un tronçon d'itinéraire en fonction du résultat d'évaluation d'itinéraire (245),
**caractérisé en ce que**
le moyen (232) de pronostic est conçu pour pronostiquer les données de véhicule (215) à l'aide d'un modèle de pronostic dynamique, dans lequel les données de véhicule (215) effectives acquises pendant un déplacement du véhicule (200) sont évaluées afin d'ajuster les données de véhicule de pronostic (233) et dans lequel le moyen (234) d'évaluation est conçu pour répéter l'évaluation (120) de l'itinéraire au moyen des données de véhicule de pronostic ajustées lorsqu'un écart entre les données de véhicule de pronostic (233) et les données de véhicule de pronostic ajustées dépasse une valeur de seuil.

8. Produit de programme informatique comprenant un code de programme permettant de mettre en œuvre le procédé (100) selon l'une des revendications 1 à 6 lorsque le programme est exécuté sur un dispositif (230) selon la revendication 7.
